# EUROPEAN PATENT SPECIFICATION

(11) **EP 2 365 357 B1**
(45) Date of publication and mention of the grant of the patent: **08.04.2015**
(21) Application number: 11154303.9
(22) Date of filing: 14.02.2011
(51) Int. Cl.: G01V 1/155

(54) **Seismic transducers having improved baseplates**
Bodenplatten seismischer Energiewandler mit verbesserter Oberfläche
Transducteurs sismiques dotés de plaques de base à surface réduite

(30) Priority: 18.02.2010 US 305689 P
(43) Date of publication of application: 14.09.2011
(73) Proprietor: ConocoPhillips Company, Houston, Texas 77079 (US)
(72) Inventor: Eick, Peter, Houston, TX 77094 (US); Brewer, Joel, Houston, TX 77094 (US); Shan, Shan, Houston, TX 77041 (US)
(74) Representative: Simpson, Paul Christopher

(56) References cited:
- US-A- 3 106 982
- US-A- 3 282 372
- US-A- 4 655 314
- US-A- 4 664 222

## Description

### FIELD OF THE INVENTION

The present invention relates generally to methods and systems for inducing seismic vibrations into an elastic medium. More particularly, but not by way of limitation, embodiments of the present invention include methods and systems for inducing seismic vibrations into subterranean formations utilizing improved seismic baseplates.

### BACKGROUND

Various methods of geophysical exploration have been developed to aid in the determining the nature of subterranean formations for exploratory oil and gas drilling. Several surveying systems have been developed that utilize one or more vibratory energy sources to induce seismic waves that are directed into the ground and reflected back to the surface by different geological subsurface layers.

In these reflection-type seismic surveys, the reflected seismic waves are detected at the surface by a group of spaced apart receivers called geophones, accelerometers, seismometers or similar transducers. These transducers are collectively referred to as "geophones" herein following industry convention, but it is understood that they could be any sensor that converts seismic energy into some readable data. The reflected seismic waves detected by the geophones are analyzed and processed to generate seismic data representative of the nature and composition of the subterranean formation at various depths, including the nature and extent of hydrocarbon deposits. In this way, the seismic information collected by geophones can be used to produce seismic reflection signals which can be processed to form images of the subsurface.

It has become common in many cases to use, as the source of propagating elastic waves, a hydraulically-operated vibratory source more simply referred to as a vibrator. There are other forms of energy sources for vibrators like electromechanical or pure electric. All of these systems typically generate vibrations or shock waves by using a reaction mass member that is actuated by a hydraulic or electric system and electrically controlled by a servo valve. In a typical embodiment, a vibrator comprises a double ended piston rigidly affixed to a coaxial piston rod. The piston is located in reciprocating relationship in a cylinder formed within a heavy reaction mass. Means are included for alternately introducing hydraulic fluid under high pressure to opposite ends of the cylinder or for an electric coil and magnet type assembly to impart a reciprocating motion to the piston relative to the reaction mass. The piston rod extending from the reaction mass is rigidly coupled to a baseplate, which is maintained in intimate contact with ground surface. Since the inertia of the reaction mass tends to resist displacement of the reaction mass relative to the earth, the motion of the piston is coupled through the piston rod and baseplate to impart vibratory seismic energy in the earth.

US3106982 and US4664222 describe vibrators having polygon baseplates.

Typically, vibrators are transported by carrier vehicle, and it is also known to prevent decoupling of the baseplate from the ground by applying a portion of the carrier vehicle's weight to the baseplate during operation. The weight of the carrier vehicle is frequently applied to the baseplate through one or more spring and stilt members, each having a large compliance, with the result that a static bias force is imposed on the baseplate, while the dynamic forces of the baseplate are decoupled from the carrier vehicle itself. In this way, the force from the vibrating mass is transferred through the baseplate into the earth at a desired vibration frequency. The hydraulic system forces the reaction mass to reciprocate vertically, at the desired vibration frequency, through a short vertical stroke.

This type of vibrational seismic exploration system typically uses a quasi-sinusoidal reference signal, or so-called pilot signal, of continuously varying frequency, selected band width, and selected duration to control the introduction of seismic waves into the earth. The pilot signal is converted into a mechanical vibration in a land vibrator having a baseplate which is coupled to the earth. The land vibrator is typically mounted on a carrier vehicle, which provides locomotion. During operation, the baseplate is contacted with the earth's surface and the weight of the carrier vehicle is applied to the baseplate. A servo-hydraulic piston connected to the baseplate is then excited by the pilot signal, causing vibration of the baseplate against the earth.

A significant problem with conventional systems employing a vibrating baseplate to impart seismic waves into the earth is that the actual motion of the baseplate, and thus the actual seismic energy imparted to the earth, is different from the ideal motion represented by the pilot signal. This difference can be caused by a variety of factors, including (1) harmonic distortion or "ringing" of the baseplate, (2) decoupling of the baseplate from the earth's surface commonly referred to as bouncing or "pogo-sticking," and (3) flexure of the baseplate. The differences between the pilot signal and the actual baseplate motion are problematic because, in the past, the pilot signal was used to pulse-compress the reflected seismic signal either through correlation or inversion. Thus, where the actual motion of the baseplate differs from the ideal motion corresponding to the pilot signal, the pulse-compressed reflected seismic signal that is produced by correlation or more modernly by inversion is inaccurate.

The data gathering and correlating portion of the various seismic exploration systems have been improved to the point that problems have been discovered with the performance of existing baseplates. These problems are related to the fact that baseplates have resonant frequencies and they also vibrate, both of which produce distortions in the generated energy signal. These distortions are carried completely through the process and detrimentally affect the geological information produced.

Accordingly, these deficiencies of conventional baseplates (e.g. harmonics, decoupling, and baseplate flexure) are problematic in that each of these problems contribute to producing a distorted seismic signal. Baseplate flexure is not only problematic from the standpoint of generating a distorted seismic signal, but it is also problematic, because flexure of the baseplate contributes to structural failure of the baseplate.

Accordingly, there is a need in the art for improved seismic vibrator assemblies and the baseplates thereof that address one or more disadvantages of the prior art.

### SUMMARY

The present invention relates generally to methods and systems for inducing seismic vibrations into an elastic medium. More particularly, but not by way of limitation, embodiments of the present invention include methods and systems for inducing seismic vibrations into subterranean formations utilizing improved seismic baseplates.

An example of a method for inducing seismic energy waves in a subterranean formation comprises the steps of: providing a seismic transducer apparatus comprising a frame, a baseplate attached to the frame, the baseplate having a flat lower surface for engagement of a ground surface, the baseplate having a circumference; a reaction mass supported by the frame, and a driver configured to actuate the reaction mass in a reciprocating motion; wherein the circumference of the baseplate is in the form of a polygon, wherein the polygon comprises at least five sides; engaging the ground surface with the baseplate; actuating the reaction mass via the driver in a reciprocating motion; allowing vibratory energy to be imparted to the baseplate so as to propagate seismic energy waves in the subterranean formation; allowing the seismic energy waves to propagate through the subterranean formation so as to produce reflected and refracted seismic energy waves; and detecting one or more of the reflected and refracted seismic energy waves.

An example of a seismic transducer apparatus for inducing energy waves in an elastic medium comprises: a frame; a baseplate attached to the frame, the baseplate having a flat lower surface for engagement of a surface of an elastic medium, the flat lower surface having a perimeter, wherein the perimeter is in the form of a polygon, wherein the polygon comprises at least five sides; a reaction mass supported by the frame; and a driver configured to actuate the reaction mass in a reciprocating motion so as to impart vibratory energy to the baseplate.

An example of a seismic vibrator apparatus comprises: a frame; a baseplate attached to the frame, the baseplate having a lower surface for engagement of a ground surface, the lower surface having a perimeter, wherein the perimeter is in the form of a polygon, wherein the polygon comprises at least five sides; wherein the base plate is comprised of an upper plate, a lower plate, and one or more members that extend from the upper plate to the lower plate so as to couple the upper plate to the lower plate; a reaction mass supported by the frame; and a driver configured to actuate the reaction mass in a reciprocating motion so as to impart vibratory energy to the baseplate.

The features and advantages of the present invention will be apparent to those skilled in the art.

### BRIEF DESCRIPTION OF THE DRAWINGS

A more complete understanding of the present disclosure and advantages thereof may be acquired by referring to the following description taken in conjunction with the accompanying figures, wherein:
Figure 1 illustrates a side view of one example of a seismic exploration system in accordance with one embodiment of the present invention.
Figure 2 illustrates a side view of one example of a seismic transducer in accordance with one embodiment of the present invention.
Figure 3A illustrates a top view of an octagonal baseplate in accordance with one embodiment of the present invention.
Figure 3B illustrates a side view of an octagonal baseplate in accordance with one embodiment of the present invention.
Figure 4A illustrates a top view of a hexagonal baseplate in accordance with one embodiment of the present invention.
Figure 4B illustrates a side view of a hexagonal baseplate in accordance with one embodiment of the present invention.
Figure 5 illustrates a side view of a baseplate having a plurality of truss members in accordance with one embodiment of the present invention.

While the present invention is susceptible to various modifications and alternative forms, specific exemplary embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the and scope of the invention as defined by the appended claims.

### DETAILED DESCRIPTION

The present invention relates generally to methods and systems for inducing seismic vibrations into an elastic medium. More particularly, but not by way of limitation, embodiments of the present invention include methods and systems for inducing seismic vibrations into subterranean formations utilizing improved seismic baseplates.

Methods and systems are provided for inducing seismic energy waves in a subterranean formation. In certain embodiments, seismic transducers in accordance with the present invention comprise a frame, a reaction mass supported by the frame, a driver, and a baseplate attached to the frame. The driver actuates the reaction mass in a reciprocating motion, imparting a vibratory energy to the baseplate. As the baseplate is engaged with a ground surface during operation, the vibratory energy of the baseplate is imparted directly to the ground surface so as to propagate seismic waves into the subterranean formation. The seismic waves are then reflected and refracted by the subsurface strata and geological features of the subterranean formation. The reflected and refracted seismic waves may then be detected by a plurality of seismic detectors. The detected seismic data is then interpreted to reveal seismic information representative of the surveyed subsea region of the earth.

In certain embodiments, baseplates of the present invention may include certain enhancements such as having a perimeter in the shape of a polygon, such as, for example, an octagon. Advantages of such baseplate enhancements include, but are not limited to, a reduction of baseplate harmonics or ringing, enhanced baseplate strength so as to reduce baseplate fatigue, subsequent fracture, or failure, a reduction of baseplate flexure, and a consequent reduction of baseplate weight resulting in a baseplate more responsive to actuation. These advantages ultimately translate to improved seismic surveys, reaching greater depths and/or having higher resolution. Reduced baseplate flexure and harmonics significantly enhances the resolution of the higher frequency data in typical geological depths.

Reference will now be made in detail to embodiments of the invention, one or more examples of which are illustrated in the accompanying drawings. Each example is provided by way of explanation of the invention, not as a limitation of the invention. It will be apparent to those skilled in the art that various modifications and variations can be made in the present invention without departing from the scope of the invention. For instance, features illustrated or described as part of one embodiment can be used on another embodiment to yield a still further embodiment. Thus, it is intended that the present invention cover such modifications and variations that come within the scope of the invention.

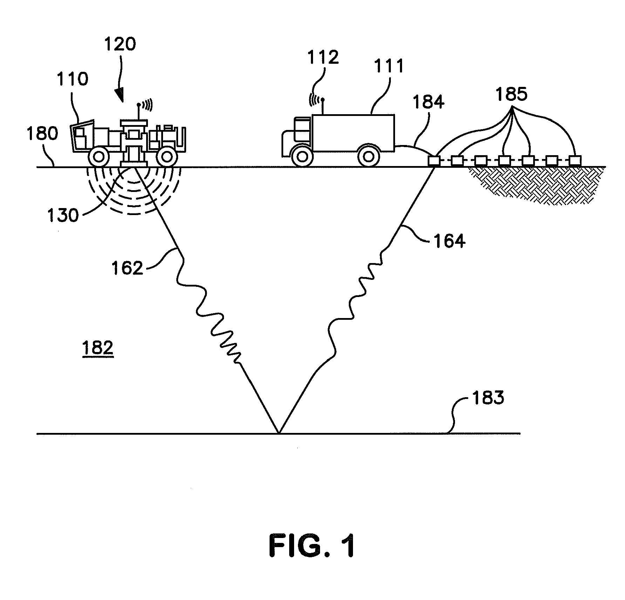

Figure 1 illustrates a side view of one example of a seismic exploration system in accordance with one embodiment of the present invention. A pilot signal is generated in recorder/processor carrier vehicle 111 and sent by radio wave link 112 to a land vibrator 120. Land vibrator 120 converts the pilot signal into mechanical motion that vibrates baseplate 130. Baseplate 130 contacts ground surface 180 of the earth and is coupled to ground surface 180 by the weight of carrier vehicle 110. Baseplate 130 induces seismic waves 162 into subsurface 182 of the earth. Induced seismic wave 162 travels downward through subsurface 182 and is altered (i.e., refracted and/or reflected) by subsurface strata 183. Altered seismic waves 164 travels from subsurface strata 183 upward through subsurface 182 to surface 180. Seismic receivers 185, such as geophones, located on surface 180, are generally spaced apart from each other and from land vibrator 120. Seismic receivers 185 measure altered seismic waves 164 at surface 180 and transmit an altered seismic signal indicating altered seismic wave 28 across geophone lines 184 to recorder/processor carrier vehicle 110. This communication may be accomplished via wires conventionally, or with autonomous recorders where the data is later collected and transcribed to the recording media. A baseplate signal is transmitted from land vibrator 120 via radio wave link 112 to recorder/processor carrier vehicle 110 for processing. In this way, seismic survey data is collected and interpreted so as to reveal the nature and the geology of subterranean formation 182.

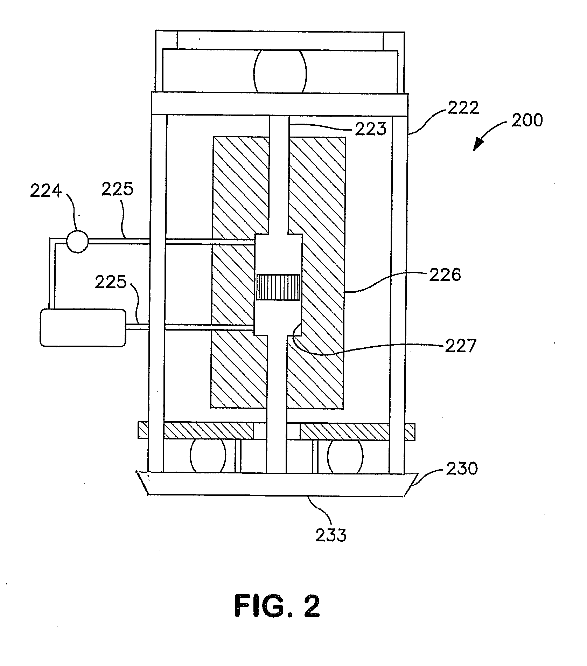

Figure 2 illustrates a side view of one example of a seismic transducer in accordance with one embodiment of the present invention. Seismic transducer apparatus 200 utilizes a reciprocating motion of reaction mass 226 to impart vibratory energy to baseplate 230.

More specifically, frame 222 supports and is rigidly connected to piston rod 223 and baseplate 230. Driver 224 pumps or otherwise supplies hydraulic fluid to hydraulic cylinder 227 through ports 225. In this way, driver 224 actuates reaction mass 226 about piston rod 223. When vibrations are induced by controlled hydraulic fluid flow into and from cylinder 227, reciprocating motion of reaction mass 226 is generated about piston rod 223. As reaction mass 226 is supported by frame 222, this reciprocating motion is transmitted to baseplate 230 via the inertia of reaction mass 226. The term, "supported," as used herein, explicitly includes being indirectly supported by frame 222, for example, by hydraulic fluid in hydraulic cylinder 227. In this way, vibratory energy is imparted to baseplate 230 corresponding to the motion of reaction mass 226. Baseplate 230 then transmits the vibratory energy to a ground surface (such as ground surface 180 depicted in Figure 1) via flat lower surface 233. In certain embodiments, baseplate 230 comprises angled edges along the perimeter of baseplate 230. These angled edges, e.g. edges that are deviated from the vertical or non-perpendicular) aid in the clearing of mud or other soil or sludge that may accumulate along the perimeter of baseplate 230. As described further herein, baseplate 230 comprises one or more improvements for producing an enhanced baseplate.

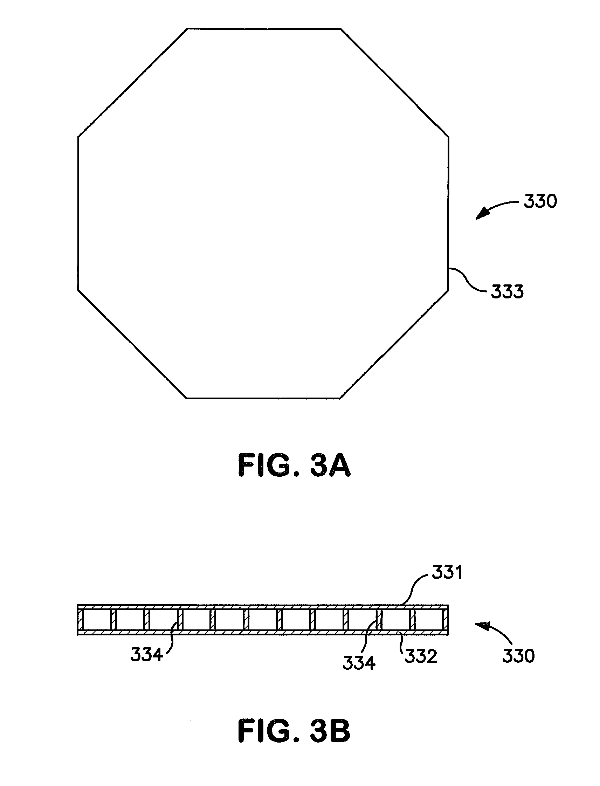

Figure 3A illustrates a top view of an octagonal baseplate in accordance with one embodiment of the present invention. In certain embodiments, perimeter 333 of baseplate 330 forms the shape of a polygon, having n sides, where n may be any integer greater than 4. In the example depicted in Figure 3A, perimeter 333 of baseplate 330 is in the shape of an octagon. Although baseplate 330 depicted in Figure 3A is shown here as an equilateral polygon, it is recognized that perimeter 333 of baseplate 330 may form an irregular polygon.

The octagonal shape of perimeter 333 of baseplate 330 reduces the flexure problems that are experienced particularly by circular baseplates, which is caused by the nature of their construction. This reduction in flexure of baseplate 330 reduces harmonics and ringing of baseplate 330. Likewise, the octagonal shape also dramatically reduces the fatigue and failure rate of baseplate 330. Additionally, the octagonal shape of baseplate 330 reduces the weight of baseplate 330 relative to a conventional rectangular or circular baseplate, which results in a more responsive baseplate.

Figure 3B illustrates a side view of an octagonal baseplate in accordance with one embodiment of the present invention. Baseplate 330 comprises upper plate 331, lower plate 332, and a plurality of walls 334. Walls 334 extend between upper plate 331 and lower plate 332 so as to join or otherwise couple upper plate 331 to lower plate 332. In certain embodiments, upper plate 331, lower plate 332, and a plurality of walls 334 is formed as one integral unit, such as, being cast from a one or more dies or molds.

Forming baseplate 330 from a solid steel baseplate structure would impose a severe weight penalty on the vibrating mechanism. The alternate structure depicted in Figure 3B however provides a much lighter weight baseplate while preserving a relatively reinforced structure resistant to flexure and fatigue failures. In this way, baseplate 330 may be maintained within acceptable weight limitations and yet be capable of withstanding the large forces generated by a seismic transducer.

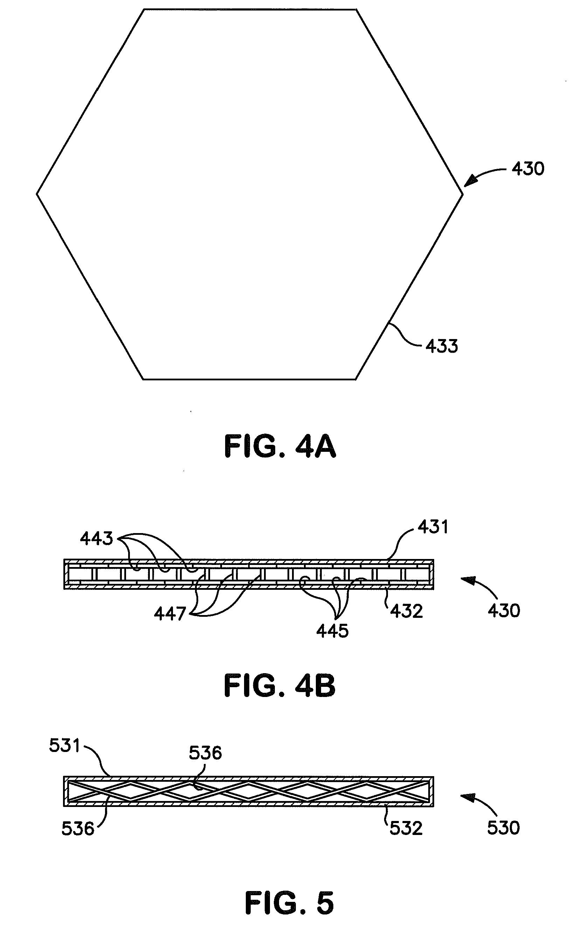

Figure 4A illustrates a top view of a hexagonal baseplate in accordance with one embodiment of the present invention. Here, perimeter 433 of baseplate 430 is in the shape of a hexagon. Once again, this polygonal shape offers one or more of the aforementioned advantages over circular and rectangular baseplates. Among other mechanisms, the polygonal shape provides enhanced coupling of the baseplate with any organic surface layer that may be present on the ground (e.g. grass or other foliage). The reduced surface area of the polygonal shape concentrates the force applied into a more limited surface area and offers enhanced compression of the organic layer to achieve the enhanced coupling of the baseplate and the ground surface.

Indeed, the polygonal shape of baseplate 430 allows seismic transducers that incorporate baseplate 430 to operate at higher seismic frequencies ranges without producing substantial signal distortion or noise. In certain embodiments, seismic transducers of the present invention operate at frequency ranges extending into the higher seismic frequency range of at least about 80 cycles per second, at least about 150 cycles per second, and/or at least about 250 cycles per second.

Figure 4B illustrates a side view of a hexagonal baseplate in accordance with one embodiment of the present invention. Here, upper plate 431 and lower plate 432 are in the shape of a polygon and more specifically, take the shape of a hexagon. It is recognized that the perimeter of upper plate 431 and/or lower plate 432 may take the form of a polygonal shape. In certain embodiments, only lower plate 432 takes the form of a polygon.

Here, baseplate 430 is constructed from a plurality of parallel steel I-beams. Each I-beam is formed from an upper flange 443, a lower flange 445, and a web 447 that joins upper flange 443 to lower flange 445. The longitudinal axes of the I-beams are located parallel to one another and adjacent I-beams are oriented so the edges of their upper and lower flanges are abutting (the webs of the I-beams lie in vertical planes). The I-beam flanges may be welded together so as to provide a unitary structure, which may be further reinforced by optional upper and lower reinforcing plates 431 and 432. It will be appreciated that this type of structure provides great resistance to stress exerted along the longitudinal axis of the I-beams, yet would be substantially lighter than a solid cast plate.

Figure 5 illustrates a side view of a baseplate having a plurality of truss members in accordance with one embodiment of the present invention. Here, baseplate 530 is depicted comprising upper plate 531, lower plate 532, and a plurality of truss members 536. Truss members 536 extend between upper plate 531 and lower plate 532 so as to join or otherwise couple upper plate 531 to lower plate 532.

It is explicitly recognized that any of the elements and features of each of the devices described herein are capable of use with any of the other devices described herein with no limitation. Furthermore, it is explicitly recognized that the steps of the methods herein may be performed in any order except unless explicitly stated otherwise or inherently required otherwise by the particular method.

It is recognized that either upper plate 531 or lower plate 532 may be formed in the shape of the aforementioned polygons. Alternatively, both upper plate 531 and lower plate 532 may be formed in the shape of the aforementioned polygons.

Therefore, the present invention is well adapted to attain the ends and advantages mentioned as well as those that are inherent therein. The particular embodiments disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative embodiments disclosed above may be altered or modified and all such variations and equivalents are considered within the scope of the present invention.

## Claims

1. A seismic transducer apparatus (200) for inducing energy waves in an elastic medium comprising:
a frame (222);
a baseplate (230) attached to the frame (222), the baseplate having a flat lower surface for engagement of a surface of an elastic medium, the flat lower surface having a perimeter, wherein the perimeter is in the form of a polygon, wherein the polygon comprises at least eight sides, optionally between 8 and 10 sides;
a reaction mass (226) supported by the frame (222); and
a driver (224) configured to actuate the reaction mass (226) in a reciprocating motion so as to impart vibratory energy to the baseplate (230).

2. The seismic transducer apparatus of claim 1 wherein the baseplate comprises an upper plate, a lower plate, and a plurality of walls that extend from the upper plate to the lower plate, wherein the walls are perpendicular to the upper place and the lower plate, wherein the walls are parallel to each other.

3. The seismic transducer apparatus of claim 1 wherein the baseplate comprises an upper plate, a lower plate, and a plurality of walls that extend from the upper plate to the lower plate.

4. The seismic transducer apparatus of claim 1 or claim 2 wherein the polygon is equilateral.

5. The seismic transducer apparatus of any of claims 1 to 4 wherein the baseplate comprises an upper plate, a lower plate, and a plurality of I-beams, wherein each I-beams has an upper flange and a lower flange with a web extending therebetween, wherein the upper flange is joined to the upper plate and the lower flange is joined to the lower plate so as to couple the upper plate, the lower plate, and the plurality of I-beams into one unitary structure.

6. The seismic transducer apparatus of claim 5 wherein the I-beams are disposed parallel and adjacent to one another.

7. The seismic transducer apparatus of any of claims 1 to 4, wherein the baseplate comprises an upper plate, a lower plate, and one or more trusses, wherein each truss comprises one or more members that join the upper plate to the lower plate so as to couple the upper plate, the lower plate, and the one or more trusses into one unitary structure.

8. The seismic transducer apparatus of claim 1 wherein the baseplate is cast from a single mold to form an integral unit.

9. A method for inducing seismic energy waves in a subterranean formation comprising the steps of:
providing a seismic transducer apparatus (200) comprising a frame, (222) a baseplate (230) attached to the frame (222), the baseplate (230) having a flat lower surface for engagement of a ground surface, the baseplate having a circumference, a reaction mass (226) supported by the frame (222) and a driver (224) configured to actuate the reaction mass (226) in a reciprocating motion;
wherein the circumference of the baseplate (230) is in the form of a polygon, wherein the polygon comprises at least eight sides, optionally between 8 and 10 sides;
engaging the ground surface with the baseplate (230);
actuating the reaction mass (226) via the driver (224) in a reciprocating motion;
allowing vibratory energy to be imparted to the baseplate (230) so as to propagate seismic energy waves in the subterranean formation;
allowing the seismic energy waves to propagate through the subterranean formation so as to produce reflected and refracted seismic energy waves; and
detecting one or more of the reflected and refracted seismic energy waves.

10. The method of claim 9 further comprising the step of actuating the reaction mass at an operating frequency range extending into a higher seismic frequency range above 80 cycles per second, optionally between 80 and 500 cycles per second.

11. The method of claim 9 further comprising the step of actuating the reaction mass at an operating frequency range extending into a higher seismic frequency range above 160 cycles per second, optionally between 160 and 300 cycles per second.

12. The method of any of claims 9 to 11 wherein the polygon is an octagon, wherein the baseplate comprises an upper plate, a lower plate, and a plurality of walls that extend from the upper plate to the lower plate.

13. The method of claim 12 wherein the walls are perpendicular to the upper plate and the lower plate, wherein the walls are parallel to each other.

## Patentansprüche

1. Seismische Energiewandlervorrichtung (200) zum Induzieren von Energiewellen in einem elastischen Medium, umfassend:
einen Rahmen (222);
eine Bodenplatte (230), die an dem Rahmen (222) angebracht ist, wobei die Bodenplatte eine ebene untere Oberfläche zum Angreifen einer Oberfläche eines elastischen Mediums aufweist, wobei die ebene untere Oberfläche eine Umfangslinie aufweist, wobei die Umfangslinie in der Form eines Polygons ist, wobei das Polygon wenigstens acht Seiten umfasst, optional zwischen 8 und 10 Seiten;
eine Reaktionsmasse (226), die durch den Rahmen (222) gestützt ist; und
einen Treiber (224), der dafür eingerichtet ist, die Reaktionsmasse (226) in einer Auf-und-ab-Bewegung zu betätigen, um dadurch Vibrationsenergie an die Bodenplatte (230) zu übermitteln.

2. Seismische Energiewandlervorrichtung gemäß Anspruch 1, bei der die Bodenplatte eine obere Platte, eine untere Platte und eine Vielzahl von Wänden, die sich von der oberen Platte zu der unteren Platte erstrecken, umfasst, wobei die Wände senkrecht zu der oberen Platte und der unteren Platte sind, wobei die Wände parallel zueinander sind.

3. Seismische Energiewandlervorrichtung gemäß Anspruch 1, bei der die Bodenplatte eine obere Platte, eine untere Platte und eine Vielzahl von Wänden, die sich von der oberen Platte zu der unteren Platte erstrecken, umfasst.

4. Seismische Energiewandlervorrichtung gemäß Anspruch 1 oder Anspruch 2, bei der das Polygon gleichseitig ist.

5. Seismische Energiewandlervorrichtung gemäß einem der Ansprüche 1 bis 4, bei der die Bodenplatte eine obere Platte, eine untere Platte und eine Vielzahl von I-Trägern umfasst, wobei jeder I-Träger einen oberen Flansch und einen unteren Flansch aufweist, zwischen denen sich ein Netz erstreckt, wobei der obere Flansch mit der oberen Platte verbunden ist und der untere Flansch mit der unteren Platte verbunden ist, um dadurch die obere Platte, die untere Platte und die Vielzahl von I-Trägern zu einer einheitlichen Struktur zu koppeln.

6. Seismische Energiewandlervorrichtung gemäß Anspruch 5, bei der die I-Träger parallel und benachbart zueinander angeordnet sind.

7. Seismische Energiewandlervorrichtung gemäß einem der Ansprüche 1 bis 4, bei der die Bodenplatte eine obere Platte, eine untere Platte und eine oder mehrere Traversen umfasst, wobei jede Traverse ein oder mehrere Glieder umfasst, die die obere Platte mit der unteren Platte verbinden, um dadurch die obere Platte, die untere Platte und die eine oder mehreren Traversen zu einer einheitlichen Struktur zu koppeln.

8. Seismische Energiewandlervorrichtung gemäß Anspruch 1, bei der die Bodenplatte mittels einer einzigen Form gegossen ist, um eine integrale Einheit zu bilden.

9. Verfahren zum Induzieren seismischer Energiewellen in einer unterirdischen Formation, umfassend die Schritte:
Bereitstellen einer seismischen Energiewandlervorrichtung (200), umfassend einen Rahmen (222), eine Bodenplatte (230), die an dem Rahmen (222) angebracht ist, wobei die Bodenplatte (230) eine ebene untere Oberfläche zum Angreifen einer Untergrundoberfläche aufweist, wobei die Bodenplatte einen Umfang, eine Reaktionsmasse (226), die durch den Rahmen (222) gestützt ist, und einen Treiber (224), der dafür eingerichtet ist, die Reaktionsmasse (226) in einer Auf-und-ab-Bewegung zu betätigen, aufweist;
wobei der Umfang der Bodenplatte (230) in der Form eines Polygons ist, wobei das Polygon wenigstens acht Seiten umfasst, optional zwischen 8 und 10 Seiten;
Angreifen der Untergrundoberfläche mit der Bodenplatte (230);
Betätigen der Reaktionsmasse (226) über den Treiber (224) in einer Auf-und-ab-Bewegung;
Erlauben, dass Vibrationsenergie an die Bodenplatte (230) übermittelt wird, um dadurch seismische Energiewellen in der unterirdischen Formation fortzupflanzen;
Erlauben, dass sich die seismischen Energiewellen durch die unterirdische Formation hindurch fortpflanzen, um dadurch reflektierte und gebrochene seismische Energiewellen zu erzeugen; und
Detektieren einer oder mehrerer der reflektierten und gebrochenen seismischen Energiewellen.

10. Verfahren gemäß Anspruch 9, ferner umfassend den Schritt des Betätigens der Reaktionsmasse mit einem Betriebsfrequenzbereich, der sich in einen höheren seismischen Frequenzbereich oberhalb von 80 Zyklen pro Sekunde, optional zwischen 80 und 500 Zyklen pro Sekunde, erstreckt.

11. Verfahren gemäß Anspruch 9, ferner umfassend den Schritt des Betätigens der Reaktionsmasse mit einem Betriebsfrequenzbereich, der sich in einen höheren seismischen Frequenzbereich oberhalb von 160 Zyklen pro Sekunde, optional zwischen 160 und 300 Zyklen pro Sekunde, erstreckt.

12. Verfahren gemäß einem der Ansprüche 9 bis 11, wobei das Polygon ein Oktagon ist, wobei die Bodenplatte eine obere Platte, eine untere Platte und eine Vielzahl von Wänden, die sich von der oberen Platte zu der unteren Platte erstrecken, umfasst.

13. Verfahren gemäß Anspruch 12, wobei die Wände senkrecht zu der oberen Platte und der unteren Platte sind, wobei die Wände parallel zueinander sind.

## Revendications

1. Appareil transducteur sismique (200) pour induire des ondes énergétiques dans un milieu élastique comprenant :
un châssis (222) ;
une plaque de base (230) fixée au châssis (222), la plaque de base ayant une surface inférieure plate qui est à même de s'engager sur une surface d'un milieu élastique, la surface inférieure plate ayant un périmètre, dans lequel le périmètre se présente sous la forme d'un polygone, le polygone comprenant au moins huit côtés, éventuellement entre 8 et 10 côtés ;
une masse réactionnelle (226) supportée par le châssis (222) ; et
un dispositif de commande (224) configuré pour activer la masse réactionnelle (226) dans un mouvement de va-et-vient de manière à communiquer une énergie vibratoire à la plaque de base (230).

2. Appareil transducteur sismique selon la revendication 1, dans lequel la plaque de base comprend une plaque supérieure, une plaque inférieure et une pluralité de parois qui s'étendent de la plaque supérieure à la plaque inférieure, dans lequel les parois sont perpendiculaires à la plaque supérieure et à la plaque inférieure, les parois étant parallèles l'une à l' autre .

3. Appareil transducteur sismique selon la revendication 1, dans lequel la plaque de base comprend une plaque supérieure, une plaque inférieure et une pluralité de parois qui s'étendent de la plaque supérieure à la plaque inférieure.

4. Appareil transducteur sismique selon la revendication 1 ou la revendication 2, dans lequel le polygone est équilatéral.

5. Appareil transducteur sismique selon l'une quelconque des revendications 1 à 4, dans lequel la plaque de base comprend une plaque supérieure, une plaque inférieure et une pluralité de poutres en I, dans lequel chaque poutre en I a une aile supérieure et une aile inférieure avec une âme qui s'étend entre elles, dans lequel l'aile supérieure est jointe à la plaque supérieure et l'aile inférieure est jointe à la plaque inférieure de manière à coupler la plaque supérieure, la plaque inférieure et la pluralité de poutres en I afin de former une seule structure unitaire.

6. Appareil transducteur sismique selon la revendication 5, dans lequel les poutres en I sont disposées de manière parallèle et adjacente les unes aux autres.

7. Appareil transducteur sismique selon l'une quelconque des revendications 1 à 4, dans lequel la plaque de base comprend une plaque supérieure, une plaque inférieure et une ou plusieurs consoles, dans lequel chaque console comprend un ou plusieurs éléments qui joignent la plaque supérieure à la plaque inférieure de manière à coupler la plaque supérieure, la plaque inférieure et les une ou plusieurs consoles afin de former une seule structure unitaire.

8. Appareil transducteur sismique selon la revendication 1, dans lequel la plaque de base est coulée dans un moule unique pour former une unité d'un seul tenant.

9. Procédé d'induction d'ondes d'énergie sismique dans une formation souterraine comprenant les étapes consistant à :
fournir un appareil transducteur sismique (200) comprenant un châssis (222), une plaque de base (230) fixée au châssis (222), la plaque de base (230) ayant une surface inférieure plate qui est à même de s'engager sur une surface de terre, la plaque de base ayant une circonférence, une masse réactionnelle (226) supportée par le châssis (222) et un dispositif de commande (224) configuré pour activer la masse réactionnelle (226) dans un mouvement de va-et-vient ;
dans lequel la circonférence de la plaque de base (230) se présente sous la forme d'un polygone, da
ns lequel le polygone comprend au moins huit côtés, éventuellement entre 8 et 10 côtés ;
engager la surface de terre sur la plaque de base (230) ;
activer la masse réactionnelle (226) via le dispositif de commande (224) dans un mouvement de va-et-vient ;
permettre la communication d'énergie vibratoire à la plaque de base (230) de manière à propager des ondes d'énergie sismique dans la formation souterraine ;
permettre la propagation des ondes d'énergie sismique à travers la formation souterraine de manière à produire des ondes d'énergie sismique réfléchies et réfractées ;
détecter une ou plusieurs des ondes d'énergie sismique réfléchies et réfractées.

10. Procédé selon la revendication 9, comprenant en outre l'étape d'activation de la masse réactionnelle dans une plage de fréquences d'exploitation s'étendant dans une plage de fréquences sismiques plus élevée au-dessus de 80 cycles par seconde, éventuellement entre 80 et 500 cycles par seconde.

11. Procédé selon la revendication 9, comprenant en outre l'étape d'activation de la masse réactionnelle dans une plage de fréquences d'exploitation s'étendant dans une plage de fréquences sismiques plus élevée au-dessus de 160 cycles par seconde, éventuellement entre 160 et 300 cycles par seconde.

12. Procédé selon l'une quelconque des revendications 9 à 11, dans lequel le polygone est un octogone, dans lequel la plaque de base comprend une plaque supérieure, une plaque inférieure et une pluralité de parois qui s'étendent de la plaque supérieure à la plaque inférieure.

13. Procédé selon la revendication 12, dans lequel les parois sont perpendiculaires à la plaque supérieure et à la plaque inférieure, dans lequel les parois sont parallèles l'une à l'autre.
